# EUROPÄISCHE PATENTANMELDUNG

(11) **EP 4 484 540 A1**
(43) Veröffentlichungstag der Anmeldung: **01.01.2025**
(21) Anmeldenummer: 24184308.5
(22) Anmeldetag: 25.06.2024
(51) Int. Cl.: C12C 7/20, C12C 7/22, C12C 13/02, C12C 13/08

(54) **VERFAHREN ZUR WÜRZEKOCHUNG IN EINER BRAUANLAGE UND BRAUANLAGE**

(30) Priorität: 28.06.2023 DE 102023117034
(71) Anmelder: Banke GmbH, 84416 Taufkirchen (Vils) (DE)
(72) Erfinder: Banke, Friedrich, 85570 Markt Schwaben (DE); Pfister, Stefan, 91330 Eggolsheim (DE)
(74) Vertreter: Schlimme, Wolfram

(57) **Zusammenfassung**

Ein Verfahren zur Würzekochung in einer Brauanlage (1) mit einer Würzepfanne (2) zur Aufnahme von Würze (W) und mit zumindest einem der Würzepfanne (2) zugeordneten Würze-Wärmetauscher (22, 36), der primärseitig von einem Wärmeenergie abgebenden Hochdruckdampf (WTD_{HD}, BD_{HD}) durchströmt wird und der sekundärseitig Wärmeenergie an die Würze (W) abgibt, zeichnet sich dadurch aus, dass der Hochdruckdampf (WTD_{HD}) in einer Aufheizphase durch Zufuhr von externer Niedertemperatur-Start-Energie und von Antriebsenergie eines Dampf-Verdichters (34, 26) in Strömungsrichtung vor dem Würze-Wärmetauscher (22, 36) erzeugt wird, dass die Wärmeübertragung von der externen Niedertemperatur-Start-Energie über den Hochdruckdampf (WTD_{HD}) an die Würze bei Erreichen der Verdampfungstemperatur der Würze, bei der aus der Würze Brüdendampf gebildet wird, zumindest zum Teil eingestellt wird und dass dann in einer Kochungsphase zumindest ein Teil der Wärmeenergie des Brüdendampfs mittels des Dampf-Verdichters (26 34) geboostert und wieder an die Würze (W) abgegeben wird.

## Beschreibung

Diese Patentanmeldung nimmt die Priorität der deutschen Patentanmeldung 10 2023 117 034.1 vom 28. Juni 2023 in Anspruch.

Die vorliegende Erfindung betrifft ein Verfahren zur Würzekochung in einer Brauanlage nach dem Oberbegriff des Patentanspruchs 1. Sie betrifft ferner eine Brauanlage gemäß dem Oberbegriff das Patentanspruchs 7 und alternativ des Anspruchs 8, die insbesondere zur Durchführung eines solchen Verfahrens geeignet ist.

Dem Energiemanagement in Brauanlagen kommt im Zeichen steigender Energiekosten eine zunehmend wichtiger werdende Bedeutung zu. Der überwiegende Teil der für einen Brauprozess in einer Brauanlage benötigten Energie ist thermische Energie, die in nicht unerheblichem Maße zum Aufheizen von Läuterwürze vor dem Einleiten in die Würzepfanne und zu Kochen der Würze in der Würzepfanne benötigt wird. Beim Kochen der Würze entstehen aber auch Brüdendämpfe, mit denen thermische Energie aus der Würzepfanne ausgetragen wird. Die Nutzung dieser im Brüdendampf enthaltenen thermischen Energie in einer Brauanlage zur Erwärmung von Prozessflüssigkeit oder Wärmeträgerflüssigkeit, die ein niedrigeres Temperaturniveau aufweist, ist hinreichend bekannt und wird seit Langem in der Praxis eingesetzt. Umso wichtiger sind ständige Bestrebungen, die Wärmeverluste bei den diversen Wärmetauschprozessen zu minimieren und die thermische Energieeffizienz von Brauanlagen noch weiter zu verbessern. Üblicherweise werden dazu Wärmetauschkreisläufe vorgesehen, die vom Strom der Brauprozessflüssigkeit, beispielsweise der Würze, getrennt sind.

Aus der nicht vorveröffentlichten DE-Patentanmeldung 10 2022 131 423 B3 ist eine Brauanlage mit einer einen Hochtemperaturbereich und einen Niedertemperaturbereich aufweisenden Heißwasser-Speichereinrichtung bekannt, bei der Frischwasser als Wärmetransportmedium in einem offenen Wärmetransportsystem zum Austausch von thermischer Energie zwischen den einzelnen Anlagenkomponenten verwendet wird, wobei das Frischwasser zum Beispiel im Brüdenkondensator erhitzt und in der Heißwasser-Speichereinrichtung zwischengespeichert wird. Von dort wird es als heißes Brauwasser in den Brauprozess eingeleitet.

Aus der EP 2 516 614 B1 sind eine Vorrichtung und ein Verfahren zur Rückgewinnung von Energie in einer Bierbrauerei bekannt, wobei ein vom Prozessfluidstrom separater Wärmetauschkreislauf vorgesehen ist. Der Wärmetauschkreislauf enthält ein Wärmetransportfluid, beispielsweise Wasser, und bildet ein geschlossenes Rohrleitungssystem mit Wärmetauschern zur Wärmeübertragung zwischen dem Prozessfluid und dem Wärmetransportfluid sowie mit einem den Energiespeicher bildenden Speicherbehälter für das Wärmetransportfluid, der als Schichtspeicher ausgebildet ist. Die bei der Würzekochung, welche mittels Zufuhr von externer Wärmeenergie erfolgt, beispielsweise über einen Pfannendunstkondensator rückgewonnene thermische Energie wird als heißes Wärmetransportfluid einem Schichtspeicher zugeführt und in dessen heißeren Kopfraum eingeleitet, von wo es beispielsweise einem Wärmetauscher zur Läuterwürze-Erhitzung zugeführt wird, die auf einem niedrigeren Temperaturniveau erfolgt.

In diesem Stand der Technik erfolgt somit eine Rückgewinnung von thermischer Energie aus heißeren Anlagenbereichen des Brauprozesses, die dann weniger heißen Anlagenbereichen des Brauprozesses zur Verfügung gestellt wird. Eine Kochung der Würze erfolgt stets unter Zufuhr von externer thermischer Energie, beispielsweise durch einen mit fossilen Brennstoffen beheizten Würzekocher.

Die DE 30 23 032 A1 zeigt und beschreibt ein Verfahren zur Würzekochung in einer Brauanlage mit einer Würzepfanne und zumindest einem dieser zugeordneten Wärmetauscher, der primärseitig von einem Wärmeenergie abgebenden Hochdruckdampf durchströmt wird und der sekundärseitig Wärmeenergie an die Würze abgibt. Der Hochdruckdampf wird in einer Aufheizphase in Strömungsrichtung vor dem Wärmetauscher durch Zufuhr von externer Energie erzeugt. Bei Erreichen der Verdampfungstemperatur der Würze wird die Wärmeübertragung von der externen Energie über den Hochdruckdampf an die Würze zumindest zum Teil eingestellt. In einer Kochungsphase wird zumindest ein Teil der Wärmeenergie des Brüdendampfs mittels eines Dampf-Verdichters geboostert und wieder an die Würze abgegeben.

Aus der WO 2006 / 100 062 A1 ist es bekannt, Hochdruckdampf durch Zufuhr von externer Start-Energie und von Antriebsenergie eines Dampf-Verdichters zu erzeugen, wobei die Temperatur des Wärmeträgers mindestens 120°C beträgt.

Aufgabe der vorliegenden Erfindung ist es, die Wärmerückgewinnung in einer Brauanlage noch weiter zu verbessern und den Einsatz von externer Energie bei der Würzekochung noch weiter zu reduzieren.

Diese Aufgabe wird gelöst durch ein Verfahren zur Würzekochung in einer Brauanlage mit den Merkmalen des Anspruchs 1 sowie durch eine Brauanlage mit den Merkmalen des Anspruchs 7 oder alternativ des Anspruchs 8.

Das erfindungsgemäße Verfahren zur Würzekochung in einer Brauanlage mit einer Würzepfanne zur Aufnahme von Würze und mit zumindest einem der Würzepfanne zugeordneten Würze-Wärmetauscher, der primärseitig von einem Wärmeenergie abgebenden Hochdruckdampf durchströmt wird und der sekundärseitig Wärmeenergie an die Würze abgibt, zeichnet sich dadurch aus, dass der Hochdruckdampf in einer Aufheizphase durch Zufuhr von externer Niedertemperatur-Start-Energie und von Antriebsenergie eines Dampf-Verdichters in Strömungsrichtung vor dem Würze-Wärmetauscher erzeugt wird, dass die Wärmeübertragung von der externen Niedertemperatur-Start-Energie über den Hochdruckdampf an die Würze bei Erreichen der Verdampfungstemperatur der Würze, bei der aus der Würze Brüdendampf gebildet wird, zumindest zum Teil eingestellt wird und dass dann in einer Kochungsphase zumindest ein Teil der Wärmeenergie des Brüdendampfs mittels des Dampf-Verdichters geboostert und wieder an die Würze abgegeben wird.

Unter dem Begriff Niedertemperatur-Start-Energie wird eine externe Start-Energie verstanden, die ein Wärmeträgerfluid für thermische Energie auf eine Temperatur von weniger als 100 °C, vorzugsweise weniger als 96 °C, weiter vorzugsweise zwischen 60 °C und 95 °C, erwärmt.

Beim erfindungsgemäßen Verfahren wird nach einem initialen Erhitzen der Würze durch extern zugeführte thermische Niedertemperatur-Start-Energie bis zur Würzekochung (Aufheizphase) und dem damit einhergehenden Entstehen von Brüdendampf zumindest ein Teil der Wärmeenergie des Brüdendampfs mittels eines Dampf-Verdichters geboostert und wieder an die Würze abgegeben. Die Wärmeenergie des Brüdendampfs wird somit - zumindest teilweise - wiederverwendet, wobei sie durch Einleiten der Verdichterenergie geboostert wird. Die zum Betrieb des Verdichters erforderliche mechanische Energie kann durch regenerativ erzeugte oder durch CO₂-frei gewonnene elektrische Energie (z.B. Solarenergie oder Windkraft) bereitgestellt werden. Die thermische Niedertemperatur-Start-Energie kann dann während des Kochprozesses der Würze (Kochungsphase) reduziert oder abgeschaltet werden.

Das erfindungsgemäße Verfahren erlaubt eine Bereitstellung der thermischen Niedertemperatur-Start-Energie auf einem Temperaturniveau des Wärmeträgerfluids von unter 100°C, vorzugsweise zwischen 60 und 95°C. Damit ist eine kostengünstige Beheizung mit regenerativer Biomasse, wie z.B. Holzpellets oder Hackschnitzel, möglich ohne Verwendung von Kostenintensiver Hochtemperatur-Technik. Ebenso kann die thermische Niedertemperatur-Start-Energie aus einem Fernwärmenetz bezogen werden, das mit regenerativen Energien oder mit Geothermie betrieben wird.

Die Zufuhr von thermischer Niedertemperatur-Start-Energie wird während dieser Kochungsphase reduziert oder sogar gänzlich abgeschaltet, so dass während der Kochungsphase keine oder nur noch wenig externe thermische Energie benötigt wird. Die zum Betreiben des Verdichters erforderliche mechanische oder elektromechanische Energie kann ohne Verbrennung fossiler Brennstoffe gewonnen werden und der gesamte Kochungsprozess der Würze weist somit eine deutlich reduzierte CO₂-Emission auf.

Weitere bevorzugte und vorteilhafte Ausgestaltungsmerkmale des erfindungsgemäßen Verfahrens sind Gegenstand der Unteransprüche 2 bis 6.

Vorzugsweise wird der Brüdendampf durch einen Brüdendampf-Verdichter geleitet, wo er, vorzugsweise durch mechanische oder elektromechanische Energie, im Brüdendampf-Verdichter eine Druck- und Temperaturerhöhung erfährt und als Hochdruck-Brüdendampf anschließend mittels des Würze-Wärmetauschers Wärmeenergie wieder an die Würze abgibt. Die Verdichtung kann, insbesondere bei größeren Dampfmengen, zusätzlich auch als thermische Brüdendampfverdichtung mittels eines thermischen Verdichters, beispielsweise einer Strahlpumpe, durchgeführt werden. Dabei wird wie vorstehend beschrieben eine im Verhältnis zur gesamten Dampfmenge kleine Menge Hochdruckdampf erzeugt, der anschließend durch eine Strahlpumpe geleitet wird, wo er eine größere Menge Niederdruckdampf ansaugt, der sich mit dem Hochdruckdampf zu Mitteldruckdampf für Heizzwecke vermischt.

Von dort wird der entstandene Hochdruck-Brüdendampf zurück zur Würzepfanne geleitet, wo er anschließend Wärmeenergie wieder an die Würze abgibt (Kochungsphase), wobei der Hochdruck-Brüdendampf in einem der Würzepfanne zugeordneten Wärmetauscher kondensiert.

Gemäß einer vorteilhaften Ausgestaltung des Verfahrens wird der Hochdruck-Brüdendampf primärseitig in den Würze-Wärmetauscher oder in einen weiteren der Würzepfanne zugeordneten Wärmetauscher geleitet, durch den oder an dem vorbei sekundärseitig die Würze strömt. Hierbei wird der Hochdruck-Brüdendampf im Wärmetauscher primärseitig abgekühlt und kondensiert zu Brüden-Abwasser, das für weitere Wärmeübertragungen während eines Brauprozesses, zum Beispiel für die Maische- und/oder Läuterwürze-Erwärmung, genutzt werden kann und schließlich entsorgt wird.

Gemäß einer weiteren Ausführungsform des erfindungsgemäßen Verfahrens, die mit anderen Ausführungsformen kombinierbar ist, wird der Brüdendampf durch einen der Verdampfereinrichtung zugeordneten Brüdendampf-Wärmetauscher geleitet und gibt dort Wärmeenergie an das flüssige Verdampfer-Wärmeträgerfluid ab, das dann mittels des Wärmeträgerfluid-Dampfverdichters geboostert wird und als Hochdruck-Wärmeträgerdampf mittels eines der Würzepfanne zugeordneten Wärmetauschers Wärmeenergie wieder an die Würze abgibt. Auf diese Weise wird die Wärmeenergie des Brüdendampfs mittelbar wieder in die Würze zurückgeführt. Vorteilhaft ist hierbei, dass der Hochdruck-Wärmeträgerdampf nicht mit flüchtigen organischen Substanzen aus der Würze kontaminiert wird und der Dampf für eine direkte Injektion in die Würze genutzt werden kann. Zudem werden unerwünschte organische Ablagerungen im Betriebsnetz des Hochdruck-Wärmeträgerdampfes vermieden.

Vorzugsweise ist dabei vorgesehen, dass der Hochdruck-Wärmeträgerdampf in die Würzepfanne eingeleitet wird, dort kondensiert und dabei die Wärmeenergie unmittelbar an die Würze abgibt. Der dabei aus reinem Wasserdampf bestehende Hochdruck-Wärmeträgerdampf verdünnt die Würze nur in vernachlässigbar geringem Maße und der Wärmeübergang in die Würze ist sehr effektiv.

Vorzugsweise ist das Verdampfer-Wärmeträgerfluid Wasser oder ein Wasser enthaltendes Fluid. Wasser als Verdampfer-Wärmeträgerfluid und damit als in der Verdampfer-Fluidleitungsanordnung strömendes Arbeitsmedium besitzt herausragende Eigenschaften und Vorteile gegenüber anderen Arbeitsmedien, es ist nämlich natürlich verfügbar, fast überall kostenlos, ungiftig, geruchsneutral, farblos, umweltneutral und chemisch stabil. Außerdem besitzt Wasser günstige physikalische Eigenschaften, nämlich ein niedriges Druckniveau und eine sehr hohe Verdampfungsenthalpie und ermöglicht damit sehr hohe Leistungsziffern (COP - coefficient of performance), die deutlich höher liegen als bei anderen Wärmeträgern. Der Einsatz von Wasser als Verdampfer-Wärmeträgerfluid ist daher ökologisch nachhaltig

Gemäß einer anderen Ausgestaltung des Verfahrens wird der Hochdruck-Brüdendampf kondensiert und das Brüdenkondensat in die Würze eingeleitet. Auf diese Weise entsteht ein im Wesentlichen geschlossener Brüdenkreislauf, wobei allerdings in der Würze unerwünschte leichtflüchtige Stoffe, zum Beispiel leicht flüchtige Aromaten, vorher aus dem Brüdenkreislauf in gasförmigem Zustand entweichen können oder entfernt werden. Bei der Einleitung des Hochdruck-Brüdendampfes in die Würze und dem damit verbundenen Kondensationsvorgang macht sich die Wärmeübertragung die hohe Verdampfungs- und Kondensationsenthalpie von Wasserdampf zu Nutze, so dass nur sehr kleine Verdünnungseffekte hinsichtlich der Würze auftreten.

Der auf die Brauanlage gerichtete Teil der Aufgabe wird gemäß einer ersten Ausführungsform gelöst durch eine Brauanlage, mit zumindest einer Würzepfanne und einem mit dieser in Fluidverbindung stehenden Braufluid-Leitungssystem zur Aufnahme eines Braufluids, mit einem Wärmeenergie-Transportsystem mit einer Verdampfer-Fluidleitungsanordnung, in der ein Verdampfer-Wärmeträgerfluid strömt, das mittels einer Niedertemperatur-Primärenergiequelle aufheizbar ist, wobei die Verdampfer-Fluidleitungsanordnung mit zumindest einer der Würzepfanne zugeordneten Heizeinrichtung für das Braufluid fluidverbindbar oder fluidverbunden ist, wobei die Würzepfanne einen Brüdendampfauslass aufweist, der in einem Würze-Energierückgewinnungssystem über eine Niederdruck-Brüdendampfleitung mit einem Niederdruck-Dampfeinlass eines Brüdendampfverdichters in Fluidverbindung steht, wobei ein Hochdruck-Dampfauslass des Brüdendampfverdichters über eine Hochdruck-Brüdendampfleitung mit einem der Würzepfanne oder mit einem der Würzepfanne zugeordneten Würze-Wärmetauscher in Fluidverbindung bringbar ist und wobei Steuerungsmittel vorgesehen sind, die ausgebildet sind, um die Niedertemperatur-Primärenergiequelle und/oder den Wärmeträgerfluidstrom im Wärmeenergie-Transportsystem sowie den Brüdendampfstrom im Würze-Energierückgewinnungssystem zu steuern. Diese Brauanlage ist insbesondere zur Durchführung des erfindungsgemäßen Verfahrens geeignet, wobei das Braufluid vor der Würzepfanne von der Läuterwürze und in der Würzepfanne von der Würze gebildet wird.

Eine alternative Ausführungsform der erfindungsgemäßen Brauanlage ist versehen mit zumindest einer Würzepfanne und einem mit dieser in Fluidverbindung stehenden Braufluid-Leitungssystem zur Aufnahme eines Braufluids, mit einem Wärmeenergie-Transportsystem mit einer Verdampfer-Fluidleitungsanordnung, in der ein Verdampfer-Wärmeträgerfluid strömt, das mittels einer Niedertemperatur-Primärenergiequelle aufheizbar ist, wobei die Verdampfer-Fluidleitungsanordnung mit zumindest einer der Würzepfanne zugeordneten Heizeinrichtung für das Braufluid fluidverbindbar oder fluidverbunden ist, wobei die Würzepfanne einen Brüdendampfauslass aufweist, der in einem Würze-Energierückgewinnungssystem über eine Niederdruck-Brüdendampfleitung mit einem der Verdampfereinrichtung zugeordneten Brüdendampf-Wärmetauscher primärseitig in Fluidverbindung steht, der sekundärseitig ausgebildet ist, um die Wärmeenergie an das flüssige Verdampfer-Wärmeträgerfluid abzugeben, und wobei Steuerungsmittel vorgesehen sind, die ausgebildet sind, um die Niedertemperatur-Primärenergiequelle und/oder den Wärmeträgerfluidstrom im Wärmeenergie-Transportsystem sowie den Brüdendampfstrom im Würze-Energierückgewinnungssystem zu steuern.

Mit diesen erfindungsgemäßen Brauanlagen werden die bezüglich des Verfahrens bereits erwähnten Vorteile umgesetzt. Durch die offene Verdichtung im Brüdenverdichter verringern sich die exergetischen Verluste aufgrund von Gradienten an Wärmeübertragern. Diese Brauanlagen sind zu überschaubaren Kosten nahezu beliebig skalierbar, da Brüdenverdichter und auch andere Verdichter in allen relevanten Leistungsklassen am Markt verfügbar sind.

Vorzugsweise weist die Verdampfer-Fluidleitungsanordnung eine Verdampfereinrichtung und einen in Strömungsrichtung des Verdampfer-Wärmeträgerfluids nachgeordneten Dampfverdichter auf, wobei die Verdampfereinrichtung über eine Niederdruck-Dampfleitung mit dem Dampfverdichter in Fluidverbindung steht und wobei der Dampfverdichter über eine Hochdruck-Dampfleitung mit der Heizeinrichtung für das Braufluid in Fluidverbindung steht. Dem zum Aufheizen der Läuterwürze beziehungsweise der Würze und anfänglich auch zur Kochung der Würze verwendeten Verdampfer-Wärmeträgerfluid wird im Dampfverdichter mechanische oder elektromechanische Energie zugeführt, die klimaneutral regenerativ gewonnen werden kann, beispielsweise aus Wasserkraft oder Solarenergie.

Von Vorteil ist es, wenn die Verdampfer-Fluidleitungsanordnung eine Hochtemperatur-Speicheranordnung aufweist und wenn die Verdampfereinrichtung in Strömungsrichtung des Verdampfer-Wärmeträgerfluids der Speicheranordnung nachgeordnet ist. Hierbei kann das in der beispielsweise als Schichtspeicheranordnung ausgestalteten Hochtemperatur-Speicheranordnung gespeicherte heiße Wärmeträgerfluid, das eine Temperatur von knapp unter dessen Dampfpunkt aufweist, in der Verdampfereinrichtung durch Aufbringen eines nur geringen Unterdrucks und damit einer nur geringen externen Energie bereits verdampft und als Dampf dem Dampfverdichter durch eine Niederdruckdampfleitung zugeführt werden. Bei Wasser als Wärmeträgerfluid liegt die Temperatur des heißen, flüssigen Wassers im oberen Bereich einer als Schichtspeicheranordnung ausgestalteten Hochtemperatur-Speicheranordnung bei Umgebungsdruck bei knapp 100 °C, beispielsweise zwischen 96 °C und 99 °C. Nach der erfolgten Verdichtung des Wasserdampfs mittels des Dampfverdichters weist der durch die Verdichtung erhitzte Wasserdampf eine Temperatur von über 100 °C auf und liegt beispielsweise im Temperaturbereich von 100° C bis 120 °C. Bei größeren Anlagen besteht die Möglichkeit zwei oder mehr Dampfverdichter in Serie hintereinander einzusetzen, um eine besonders große Dampfdruckerhöhung und damit höhere Heizmitteltemperaturen zu erzielen.

In einer vorteilhaften Weiterbildung der Erfindung, die mit anderen Ausführungsformen kombinierbar ist, weist ein Hochdruck-Dampfeinlass der Würzepfanne eine Injektionsvorrichtung zur Einleitung von Wasser als heißem Hochdruck-Wärmeträgerdampf in die Würzepfanne oder in eine Würze-Zirkulationsleitung auf. Wie oben bereits ausgeführt wurde, wird bei dieser Art von Wärmeübertragung in die Würze, bei der der heiße Hochdruck-Wärmeträgerdampf in die Würze eingeleitet und dabei kondensiert wird, der Vorteil der hohen Verdampfungs- und Kondensationsenthalpie von Wasserdampf ausgenutzt, so dass die Würze nur in sehr geringem Maß verdünnt wird.

Gemäß einer besonders vorteilhaften Ausführungsform der erfindungsgemäßen Brauanlage ist zumindest eine Niedertemperatur-Fluidleitungsanordnung vorgesehen, die mit einem Niedertemperatur-Wärmeträgerfluid befüllbar oder befüllt ist, und einen Niedertemperatur-Wärmetauscher aufweist, der primärseitig mit der Niedertemperatur-Fluidleitungsanordnung in Fluidverbindung steht und der sekundärseitig mit der Verdampfer-Fluidleitungsanordnung in Fluidverbindung steht, wobei sekundärseitig die Verdampfereinrichtung dem Niedertemperatur-Wärmetauscher in Strömungsrichtung des Verdampfer-Wärmeträgerfluids nachgeordnet ist. Bei dieser Variante sind somit zwei in Serie hintereinander gelegene Erwärmungsstufen, nämlich eine Niedertemperaturstufe mit der Niedertemperatur-Fluidleitungsanordnung und eine Hochtemperaturstufe mit der Verdampfer-Fluidleitungsanordnung vorgesehen. Das Niedertemperatur-Wärmeträgerfluid in der Niedertemperatur-Fluidleitungsanordnung wird durch Zufuhr von externer Niedertemperatur-Start-Energie auf eine Temperatur im Bereich von etwa 60 °C bis zu 99 °C aufgeheizt und gibt seine Wärme im Niedertemperatur-Wärmetauscher an das Verdampfer-Wärmeträgerfluid in der Verdampfer-Fluidleitungsanordnung ab und dort erfolgen die bereits beschriebene Verdampfung und Dampfverdichtung. Auch das Niedertemperatur-Wärmeträgerfluid ist vorzugsweise Wasser oder enthält überwiegend Wasser.

Das Vorsehen einer von der zum Teil unter Hochdruck betriebenen Hochtemperaturstufe entkoppelten Niedertemperaturstufe, die unter Umgebungsdruck betrieben wird, bringt den zusätzlichen Vorteil mit, dass in der Niedertemperatur-Fluidleitungsanordnung, in der die externe thermische Niedertemperatur-Start-Energie in die Brauanlage eingebracht wird, marktübliche Heizaggregate ohne weitergehende technische Ansprüche, zum Beispiel Unterdruckfestigkeit oder Überdruckfestigkeit, einsetzbar sind, die kostengünstig am Markt für Gebäudebeheizung verfügbar sind. Es muss daher in der Niedertemperaturstufe nicht auf industriell zertifizierte und besonders geprüfte Anlagenteile wie zum Beispiel auf Druckspeicher zurückgegriffen werden. Hierdurch werden die Anlagenkosten deutlich gesenkt.

Von Vorteil ist weiterhin, wenn in der Niedertemperatur-Fluidleitungsanordnung vor dem Niedertemperatur-Wärmetauscher zumindest eine Niedertemperatur - Speicheranordnung für das Niedertemperatur-Wärmeträgerfluid vorgesehen ist. Durch einen solchen Wärmespeicher, der vorzugsweise ebenfalls als Schichtwärmespeicher ausgebildet sein kann, wird ein thermischer Puffer geschaffen, der Abgabe von Wärmeenergie an das Verdampfer-Wärmeträgerfluid von der Einleitung der externen Niedertemperatur-Start-Energie entkoppelt. So können beispielsweise bei Solarenergie als Niedertemperatur-Start-Energie auftretende Unregelmäßigkeiten aufgrund von durchziehenden Wolken weggepuffert werden. Ein großer Vorteil des thermischen Puffers ist, dass die erforderliche Heizleistung auf einen Bruchteil der Leistung reduziert werden kann, die während des Aufheizens der Würze erforderlich ist. Auch bei kontinuierlicher Belegung der Würzepfanne erfolgt das Aufheizen in der Regel in 15 bis 30 Minuten, gefolgt von einer 60- bis 90-minütigen Kochungsphase und einer 10- bis 15-minütigen Entleerphase. Durch die erfindungsgemäße autonome Kochung mittels Brüdenverdichtung kann ein thermischer Puffer kontinuierlich mit entsprechend kleiner Leistung beladen werden, was die Investitionskosten für die Wärmeerzeugung deutlich reduziert. Durch den in der zweiten Ausführungsform der Erfindung vorgesehenen thermischen Puffer ist auch der Einsatz von elektrischer Energie für größere Anlagen deutlich einfacher, weil deutlich kleinere elektrische Anschlussleistungen erforderlich sind, die an manchen Standorten leistungsbeschränkt sind.

Bevorzugterweise ist das Wärmeenergie-Transportsystem mit einer Niedertemperatur-Primärenergiequelle versehen, die ausgebildet ist, um ohne fossile Brennstoffe erzeugte thermische Energie in das Verdampfer-Wärmeträgerfluid oder in das Niedertemperatur-Wärmeträgerfluid, vorzugsweise von weniger als 100°C, einzubringen. Eine solche Niedertemperatur-Primärenergiequelle kann beispielsweise eine solarthermische Anlage, eine mit Photovoltaik oder mit Biogas betriebene Heizeinrichtung, ein Fernwärmenetz oder eine Geothermie-Wärmequelle sein. Die Niedertemperatur-Primärenergiequelle liefert hier die Niedertemperatur-Start-Energie, die zum Einleiten des Brauprozesses erforderlich ist.

Vorzugsweise ist die Primärenergiequelle in Strömungsrichtung des Wärmeträgerfluids vor der zugeordneten Speicheranordnung vorgesehen. Dadurch kann der oben beschriebene thermische Puffereffekt besonders wirksam erzielt werden, insbesondere, wenn die Primärenergiequelle in Strömungsrichtung des Wärmeträgerfluids unmittelbar vor der zugeordneten Speicheranordnung vorgesehen ist.

Selbstverständlich kann die Primärenergiequelle von einer mit fossilem Brennstoff beheizten Heizeinrichtung und/oder mit elektrischer Energie beheizten Heizeinrichtung gebildet sein oder eine solche aufweisen.

Allerdings ist es von ökologischem Vorteil und besonders nachhaltig, wenn die Niedertemperatur-Primärenergiequelle, wie vorstehend bereits ausgeführt wurde, von einer mit Solarenergie oder mit Biogas beheizten Heizeinrichtung und/oder geothermische Energie oder Fernwärme nutzenden Heizeinrichtung gebildet ist oder eine solche aufweist.

Die erfindungsgemäßen Brauanlagen können somit ohne den Einsatz fossiler Brennstoffe betrieben werden und mit ihnen ist beim Einsatz von regenerativ erzeugter elektrischer Energie eine vollständige CO₂-neutrale Produktionsweise möglich.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

Es zeigt:
- Fig. 1: eine vereinfachte Darstellung einer ersten Variante einer erfindungsgemäßen Brauanlage;
- Fig. 2: eine Abwandlung der ersten Variante aus Fig. 1 und
- Fig. 3: eine vereinfachte Darstellung einer zweiten Variante einer erfindungsgemäßen Brauanlage.

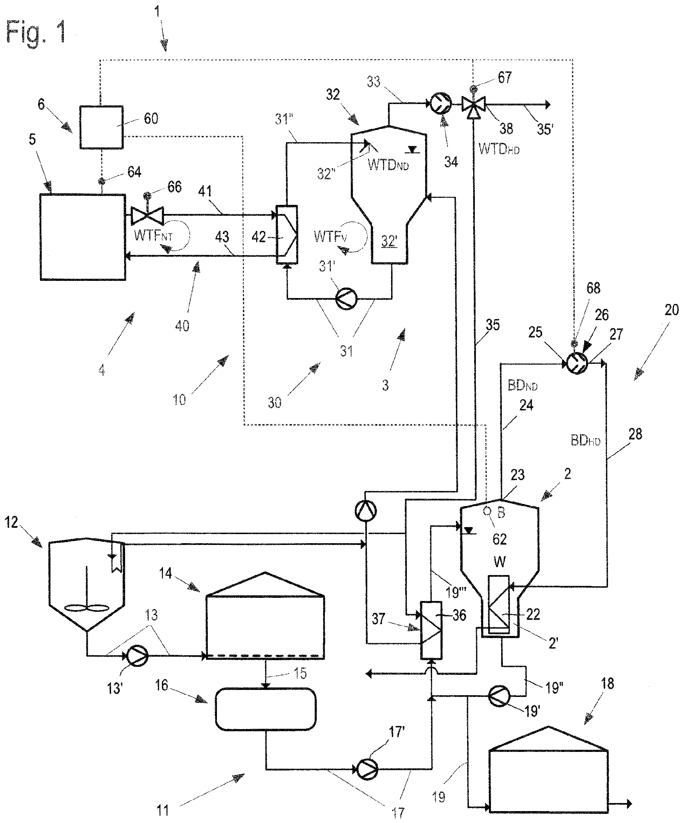

In Fig. 1 ist eine Brauanlage 1 mit einem Maischbehälter 12, einem Läuterbottich 14, einem Vorlaufgefäß 16, einem Würzekocher 2 und einem Whirlpool 18 gezeigt, die durch zum Teil mit Förderpumpen 13', 17'. 19' versehene Leitungen 13, 15, 17, 19 eines Braufluid-Leitungssystems 11 in an sich bekannter Weise miteinander in Fluidverbindung stehen. Dem Maischbehälter 12 kann ein (nicht dargestellter) Vormaischer vorgeschaltet sein. Die in den einzelnen Komponenten der Brauanlage 1 erfolgenden Verarbeitungsschritte eines Brauprozesses sind dem Fachmann hinreichend bekannt, so dass hier nicht weiter darauf eingegangen wird. Der Kern der Erfindung liegt nämlich im Wärmeenergiemanagement und zwar im Wärmeenergiemanagement der Würzepfanne 2, der energieintensivsten Anlagenkomponente der Brauanlage 1.

Für das Wärmeenergiemanagement ist ein Wärmeenergie-Transportsystem 10 vorgesehen, das nachstehend näher beschrieben wird.

Im gezeigten Beispiel umfasst das Wärmeenergie-Transportsystem 10 eine Hochtemperaturstufe 3 und eine Niedertemperaturstufe 4 sowie eine Primärenergiequelle 5. Das Vorsehen der Niedertemperaturstufe 4 ist zwar vorteilhaft, doch kann die Niedertemperaturstufe 4 auch entfallen, wenn beispielsweise eine ausreichend hohe Temperaturen generierende Primärenergiequelle 5 direkt auf die Hochtemperaturstufe 3 einwirkt.

Eine nur schematisch dargestellte und vorzugsweise mit regenerativer Energie betriebene Primärenergiequelle 5, beispielsweise eine Thermosolaranlage, eine Geothermieanlage, eine Fernwärmeversorgung oder eine regenerativ betriebene Heizeinrichtung, erwärmt ein Niedertemperatur-Wärmeträgerfluid WTF_{NT}, beispielsweise Wasser, das in einer Niedertemperatur-Fluidleitungsanordnung 40 umgewälzt wird, auf eine Temperatur unterhalb des Dampfpunktes, beispielsweise von einer Rücklauftemperatur im Bereich von 60 °C bis 80 °C auf eine Vorlauftemperatur im Bereich zwischen 96 °C und 99 °C.

Von der Primärenergiequelle 5 fließt das auf die Vorlauftemperatur erwärmte Niedertemperatur-Wärmeträgerfluid WTF_{NT} durch eine Niedertemperatur-Vorlaufleitung 41 zu einem Niedertemperatur-Wärmetauscher 42, den es primärseitig durchströmt, um dann - auf die Rücklauftemperatur abgekühlt - durch eine Niedertemperatur-Rücklaufleitung 43 wieder zur Primärenergiequelle 5 zurück zu fließen. Das Niedertemperatur-Wärmeträgerfluid WTF_{NT} nimmt in der Niedertemperatur-Fluidleitungsanordnung 40 stets den flüssigen Zustand ein und ist normalem Umgebungsdruck ausgesetzt, steht also nicht unter Überdruck und wird auch keinem Unterdruck ausgesetzt. Die Primärenergiequelle 5 dient vorwiegend dazu, den Brauprozess zum Laufen zu bringen.

Der Niedertemperatur-Wärmetauscher 42 wird im Gegenstrom sekundärseitig von einem Wasser aufweisenden oder gänzlich aus Wasser bestehenden Verdampfer-Wärmeträgerfluid WTFv im flüssigen Zustand durchströmt, welches hier auf eine Temperatur zwischen 96 °C und 99 °C aufgeheizt wird und welches durch eine Verdampfer-Fluidleitungsanordnung 30 umgewälzt wird. Das Verdampfer-Wärmeträgerfluid WTFv wird dabei mittels einer Pumpe 31' durch eine Verdampferkreislauf-Vorlaufleitung 31 aus einem Flüssigkeitsreservoir 32' der Verdampfereinrichtung 32 im flüssigen Zustand zum Niedertemperatur-Wärmetauscher 42 gefördert. Vom Niedertemperatur-Wärmetauscher 42 strömt das erhitzte flüssige Verdampfer-Wärmeträgerfluid WTFv durch eine Verdampferkreislauf-Rücklaufleitung 31" zu einer Verdampferdüse 32" der unter geringem Unterdruck stehenden Verdampfereinrichtung 32 und geht dabei in den dampfförmigen Zustand über und wird zu Niederdruck-Wärmeträgerdampf WTD_{ND} mit einer Temperatur von unter 100 °C. Der so entstehende Niederdruckdampf wird dann von einem Dampfverdichter 34 durch eine Niederdruck-Dampfleitung 33 angesaugt.

Der Dampfverdichter 34 wird mittels mechanischer oder elektromechanischer Energie, beispielsweise von einem mit regenerativ oder solar erzeugter elektrischer Energie versorgten Elektromotor, angetrieben und komprimiert das Niederdruck-Wärmeträgerdampf WTD_{ND} zu Hochdruck-Wärmeträgerdampf WTD_{HD} und erhitzt ihn dabei auf eine Temperatur von über 100 °C zu Heißdampf. Dem Dampfverdichter 34 nachgeordnet ist ein Dreiwege-Ventil 38 mit einem Aktor 38', der das Dreiwege-Ventil 38 zwischen einer ersten Stellung, in der das Hochdruck-Wärmeträgerdampf WTD_{HD} durch eine Hochdruck-Dampfleitung 35 zu einem der Würzepfanne 2 zugeordneten Wärmetauscher 36 abgeführt wird, der einen Würzeaußenkocher 37 bildet, und einer zweiten Stellung umschalten kann, in der der Hochdruck-Wärmeträgerdampf WTD_{HD} durch eine Abführleitung 35' zu anderen Verbrauchern abgeführt wird

Der Hochdruck-Wärmeträgerdampf WTD_{HD} strömt aus der Hochdruck-Dampfleitung 35 primärseitig durch den Wärmetauscher 36 und erhitzt dabei die sekundärseitig in Gegenstromrichtung durch den Wärmetauscher 36 strömende Würze W, die von einer Würze-Förderpumpe 19' durch eine Würze-Vorlaufleitung 19" aus einem Würzereservoir 2' der Würzepfanne 2 zu dem den Würzeaußenkocher 37 bildenden Wärmetauscher 36 gefördert wird. Im Würzeaußenkocher 37 wird die Würze W auf Siedetemperatur erhitzt und durch eine Würze-Rücklaufleitung 19‴ zurück in die Würzepfanne 2 geleitet. In der Würzepfanne 2 sammelt sich die dampfförmige Würze über dem flüssigen Würzereservoir 2' als Brüdendampf B. Die Würze-Vorlaufleitung 19, der Außenkocher 37 und die Würze-Rücklaufleitung 19‴ bilden einen ersten Teil eines Würze-Energierückgewinnungssystems 20, durch welches die Würze in ihren unterschiedlichen Aggregatzuständen - anfangs als flüssige und später als dampfförmige Würze (Brüdendampf) - geleitet wird.

Die Würzepfanne 2 weist in ihrem oberen Bereich einen Brüdendampfauslass 23 auf, der über eine Niederdruck-Brüdendampfleitung 24 mit einem Niederdruck-Dampfeinlass 25 eines Brüdendampfverdichters 26 direkt oder indirekt in Fluidverbindung steht. Auch der Brüdendampfverdichter 26 wird mittels mechanischer oder elektromechanischer Energie, beispielsweise von einem mit regenerativ oder solar erzeugter elektrischer Energie versorgten Elektromotor, angetrieben und komprimiert den Niederdruck-Brüdendampf BU_{ND} zu Hochdruck-Brüdendampf BD_{HD} und erhitzt ihn dabei auf eine Temperatur von vorzugsweise über 110 °C zu Heißdampf. Dieser heiße Hochdruck-Brüdendampf BD_{HD} tritt durch einen Hochdruck-Dampfauslass 27 aus dem Brüdendampfverdichter 26 aus und wird durch eine Hochdruck-Brüdendampfleitung 28 zu einem in oder an der Würzepfanne 2 angeordneten und Würze-Wärmetauscher 22 geleitet, den er primärseitig durchströmt. Auf diese Weise ist ein zweiter Teil des Würze-Energierückgewinnungssystems 20 gebildet. Der Würze-Wärmetauscher kann als Innenkocher oder als externer Außenkocher ausgeführt sein. Im Falle der Innenkocher-Ausführung ist dieser sekundärseitig von der Würze im Würzereservoir 2' der Würzepfanne 2 umgeben und heizt so die Würze auf. Der abgekühlte und kondensierte Brüdendampf verlässt den Würze-Wärmetauscher 22 als Brüdenabwasser, das als Wärmequelle für weitere Prozessstufen genutzt werden kann. Bei kleineren Anlagen kann der Würze-Wärmetauscher auch als Behälterheizfläche am Boden und/oder Wandung ausgeführt sein.

Alternativ oder zusätzlich könnte in einer auch als Aufheizphase bezeichneten Startphase, in der die Brauanlage mit der Primärenergie als externer Energie aufgeheizt wird, eine Direktdampfinjektion mit Dampf aus reinem Wasser in die Würzepfanne 2 vorgesehen sein. Für diese Aufheizung in der Startphase könnte Hochdruckdampf beispielsweise über die Hochdruck-Dampfleitung 35 und eine in den Figuren nicht dargestellte Verbindungsleitung in die Würze-Rücklaufleitung 19‴ injiziert werden. In die Verdampferkreislauf-Vorlaufleitung 31 oder in die Verdampferkreislauf-Rücklaufleitung 31' des Kreislaufs des flüssigen Verdampfer-Wärmeträgerfluid WTFv muss dann allerdings Frischwasser zugespeist werden.

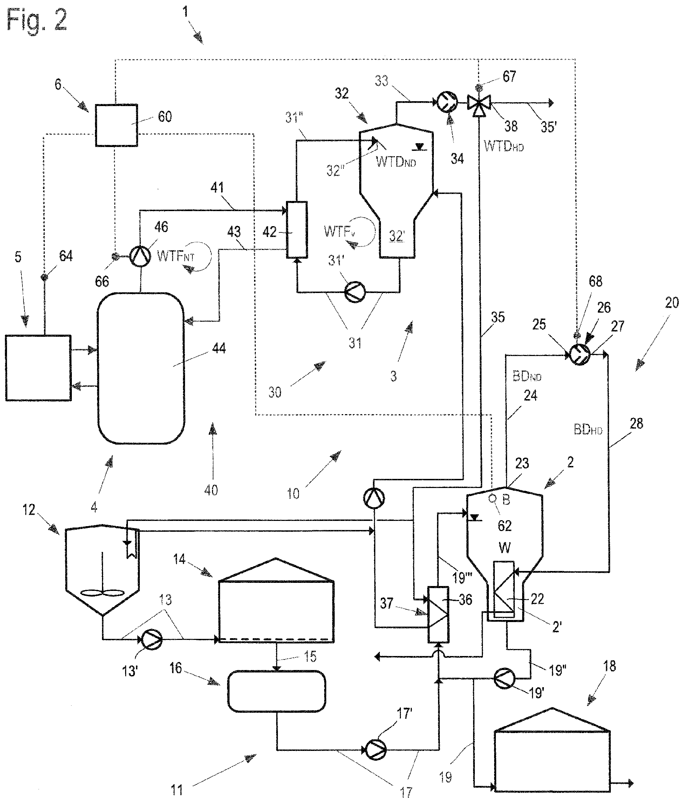

Fig. 2 zeigt eine in der Niedertemperaturstufe abgewandelte Variante der erfindungsgemäßen Brauanlage. Gegenüber der ersten Variante der ersten Ausführungsform aus Fig. 1 ist hier in der Niedertemperatur-Fluidleitungsanordnung 40 eine Niedertemperatur-Speicheranordnung 44 in Form eines Pufferspeichers vorgesehen, der als Schichtenspeicher ausgebildet sein kann. Die Niedertemperatur-Speicheranordnung 44 ist in der Vorlaufleitung 41 vor dem Niedertemperatur-Wärmetauscher 42 angeordnet und puffert das von der Primärenergiequelle 5 erwärmte flüssige Niedertemperatur-Wärmeträgerfluid WTF_{NT}. Mittels einer Vorlauf-Förderpumpe 46 wird das Niedertemperatur-Wärmeträgerfluid WTF_{NT} dem Niedertemperatur-Wärmetauscher 42 zugeführt. Der Aufbau und die Arbeitsweise dieser Brauvorrichtung 1 entsprechen ansonsten der in Verbindung mit Fig. 1 beschriebenen Brauvorrichtung 1.

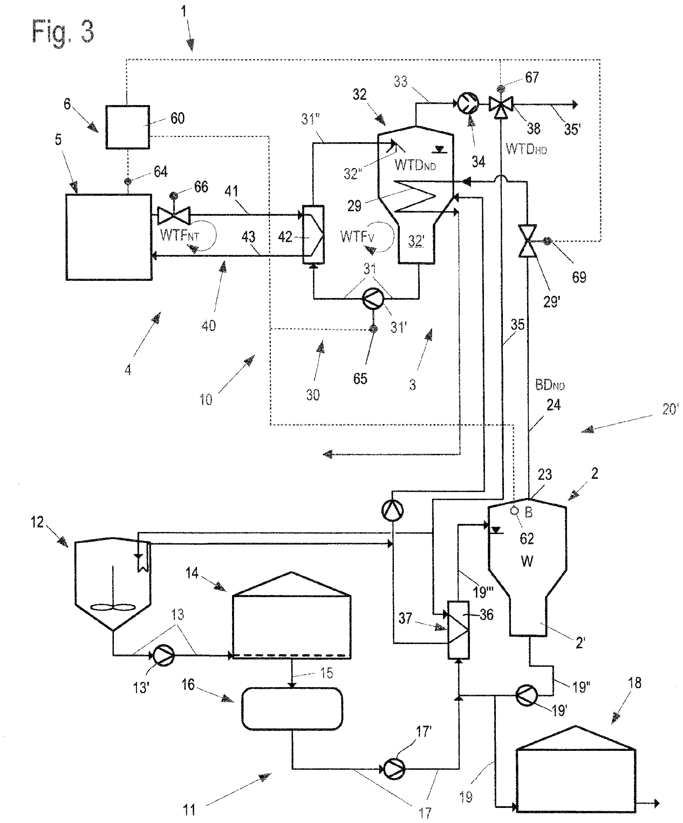

In Fig. 3 ist eine zweite Ausführungsform der Erfindung dargestellt, bei der der Brüdendampf in einem Würze-Energierückgewinnungssystem 20' nicht durch einen eigenständigen Brüdendampfverdichter strömt, sondern den Dampfverdichter 34 der Verdampfer-Fluidleitungsanordnung 30 nutzt. Da der Brüdendampf jedoch mit organischen Substanzen belastet ist, die im Wärmeträgerkreislauf und insbesondere in der Verdampfer-Fluidleitungsanordnung 30, unerwünscht sind, kann der Brüdendampf nicht direkt in den Dampfverdichter 34 der Verdampfer-Fluidleitungsanordnung 30 eingeleitet werden. Daher ist in der Verdampfereinrichtung 32 ein Brüdendampf-Wärmetauscher 29 vorgesehen, der primärseitig von dem durch die Niederdruck-Brüdendampfleitung 24 zugeführten Brüdendampf durchströmt wird. Sekundärseitig ist der Brüdendampf-Wärmetauscher 29 vom Niedertemperatur-Wärmeträgerfluid WTF_{NT} umgeben oder wird von diesem in Gegenstromrichtung durchströmt. Der aus dem Brüdendampf-Wärmetauscher 29 austretende, größtenteils kondensierte Brüdendampf wird als Brüdenabwasser abgeführt und kann noch als Wärmequelle für weitere Prozessstufen genutzt werden. Der Brüdendampf gibt so Wärmeenergie an das Niedertemperatur-Wärmeträgerfluid WTF_{NT} ab, das aufgrund des Unterdrucks in der Verdampfereinrichtung 32 bei einer unter 100 °C liegenden geringeren Temperatur in den dampfförmigen Zustand übergeht und - wie oben beschrieben - dem Dampfverdichter 34 zugeführt und dort verdichtet wird.

Alternativ kann der Brüdendampf auch direkt in die Verdampfereinrichtung 32 eingedüst werden, allerdings mit dem Nachteil, dass dann das Niedertemperatur-Wärmeträgerfluid WTF_{NT} und in der Folge dann auch das Verdampfer-Wärmeträgerfluid WTFv mit organischen Produkten kontaminiert werden. Bei einer direkten Zufuhr des Brüdendampfes zum Verdichter muss der Niederdruck-Kreislauf durch geeignete Ventilschaltung weggeschaltet werden.

Bei großen Brauanlagen ist ein zweiter zusätzlicher Verdichter mit direktem Brüdenkreislauf (wie in Verbindung mit Fig. 1 beschrieben) vorteilhaft, da er einen höheren Wirkungsgrad aufweist, weil er eine kleinere Druckdifferenz überwinden muss.

In allen drei beschriebenen Ausführungsformen der Erfindung sind Steuerungsmittel vorgesehen, die ausgebildet sind, um die Primärenegiequelle 5 und/oder den Wärmeträgerfluidstrom im Wärmeenergie-Transportsystem 10 sowie den Brüdendampfstrom im Würze-Energierückgewinnungssystem 20 zu steuern. Diese Steuerungsmittel können grundsätzlich zwar auch handbetätigt sein, doch ist bevorzugt eine Steuerungsanordnung 6 mit einer elektronischen Steuerung 60 vorgesehen, die über in den Figuren gestrichelt gezeichnete Steuerungsleitungen oder drahtlos mit zumindest einem Brüdendampf-Temperatursensor 62, mit zumindest einem Primärenergie-Aktor 64 und/oder zumindest einem Wärmeträgerfluidstrom-Aktor 65, 66, 67 und mit zumindest einem Brüdendampfstrom-Aktor 68, 69 wirksam verbunden ist. Die Aktoren können jeweils durch Absperr- oder Umschaltventile oder deren Antriebe gebildet sein oder sie können als elektrische Schalter oder Regler ausgestaltet sein und beispielsweise Pumpen regeln oder ein- oder ausschalten.

Diese Steuerungsmittel ermöglichen es, beispielsweise bei Erreichen einer vorgegebenen Temperatur der Würze, nämlich der Kochtemperatur, die Wärmeübertragung von der von der Primärenergiequelle aufgebrachten externen Niedertemperatur-Start-Energie an das Verdampfer-Wärmeträgerfluid und/oder die Wärmeübertragung vom Verdampfer-Wärmeträgerfluid an die Würze zumindest zum Teil zu unterbrechen und im Wesentlichen zeitgleich den Brüdendampf durch den Brüdendampf-Verdichter zu leiten, um dort eine Druck- und Temperaturerhöhung des Brüdendampfs zu bewirken und anschließend die Wärmeenergie des dadurch gewonnenen Hochdruck-Brüdendampfs wieder an die Würze abzugeben. Alternativ bewirken die Steuerungsmittel, nämlich der Brüdendampf-Aktor 69, dass der Brüdendampf durch Öffnen des Brüdendampf-Absperrventils 29' in den Brüdendampf-Wärmetauscher 29 eingeleitet wird, wobei gleichzeitig die Primärenergiequelle oder der Kreislauf des Niedertemperatur-Wärmeträgerfluids WTF_{NT} in der Niedertemperatur-Fluidleitungsanordnung 40 oder der Kreislauf des flüssigen Verdampfer-Wärmeträgerfluid WTFv in der Verdampfer-Fluidleitungsanordnung 30 abgeschaltet werden, beispielsweise durch Stoppen der Pumpe 31' mittels des auf die Pumpe 31' wirkenden Aktors 65.

Somit kann die erfindungsgemäße Brauanlage nach einer Startphase, in der sie mit der Primärenergie als externer Energie aufgeheizt wird, mit einer Brüdendampf-Energierekuperation weiterlaufen, wobei dafür nur die Antriebsenergie für den Brüdendampfverdichter 26 benötigt wird, die regenerativ, beispielsweise durch Solarstrom, erzeugt wird.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Brauanlage
- 2: Würzepfanne
- 2': Würzereservoir
- 3: Hochtemperaturstufe
- 4: Niedertemperaturstufe
- 5: Primärenergiequelle
- 6: Steuerungsanordnung
- 10: Wärmeenergie-Transportsystem
- 11: Braufluid-Leitungssystem
- 12: Maischbehälter
- 13: Leitung
- 13': Förderpumpe
- 14: Läuterbottich
- 15: Leitung
- 16: Vorlaufgefäß
- 17: Leitung
- 17': Förderpumpe
- 18: Whirlpool
- 19: Leitung
- 19': Würze-Förderpumpe
- 19": Würze-Vorlaufleitung
- 19‴: Würze-Rücklaufleitung
- 20: Würze-Energierückgewinnungssystem
- 20': Würze-Energierückgewinnungssystem
- 21: Wärmetauscher-Umwälzleitung
- 22: Würze-Wärmetauscher
- 23: Brüdendampfauslass
- 24: Niederdruck-Brüdendampfleitung
- 25: Niederdruck-Dampfeinlass
- 26: Brüdendampfverdichter
- 27: Hochdruck-Dampfauslass
- 28: Hochdruck-Brüdendampfleitung
- 29: Brüdendampf-Wärmetauscher
- 29': Brüdendampf-Absperrventil
- 30: Verdampfer-Fluidleitungsanordnung
- 31: Verdampferkreislauf-Vorlaufleitung
- 31': Pumpe
- 31": Verdampferkreislauf-Rücklaufleitung
- 32: Verdampfereinrichtung
- 32': Flüssigkeitsreservoir
- 32": Verdampferdüse
- 33: Niederdruck-Dampfleitung
- 34: Wärmeträgerfluid-Dampfverdichter
- 35: Hochdruck-Dampfleitung
- 36: Wärmetauscher (der Würzepfanne zugeordnet)
- 37: Würzeaußenkocher
- 38: Dreiwege-Ventil
- 40: Niedertemperatur-Fluidleitungsanordnung
- 41: Vorlaufleitung
- 42: Niedertemperatur-Wärmetauscher
- 43: Rücklaufleitung
- 44: Niedertemperatur -Speicheranordnung
- 46: Vorlauf-Förderpumpe
- 60: elektronische Steuerung
- 62: Brüdendampf-Temperatursensor
- 64: Primärenergie-Aktor
- 65: Pumpenaktor
- 66: Wärmeträgerfluidstrom-Aktor
- 67: Wärmeträgerfluidstrom-Aktor
- 68: Brüdendampfstrom-Aktor
- 69: Brüdendampf-Aktor

- B: Brüdendampf
- BD_{ND}: Niederdruck-Brüdendampf
- BD_{HD}: Hochdruck-Brüdendampf
- W: Würze
- WTD_{ND}: Niederdruck-Wärmeträgerdampf
- WTD_{HD}: Hochdruck-Wärmeträgerdampf
- WTFv: Verdampfer-Wärmeträgerfluid
- WTF_{NT}: Niedertemperatur-Wärmeträgerfluid (flüssig)

## Patentansprüche

1. Verfahren zur Würzekochung in einer Brauanlage (1) mit einer Würzepfanne (2) zur Aufnahme von Würze (W) und mit zumindest einem der Würzepfanne (2) zugeordneten Würze-Wärmetauscher (22, 36), der primärseitig von einem Wärmeenergie abgebenden Hochdruckdampf (WTD_{HD}, BD_{HD}) durchströmt wird und der sekundärseitig Wärmeenergie an die Würze (W) abgibt,
**dadurch gekennzeichnet,**
**dass** der Hochdruckdampf (WTD_{HD}, BD_{HD}) in einer Aufheizphase durch Zufuhr von externer Niedertemperatur-Start-Energie und von Antriebsenergie eines Dampf-Verdichters (34, 26) in Strömungsrichtung vor dem Würze-Wärmetauscher (22, 36) erzeugt wird,
**dass** die Wärmeübertragung von der externen Niedertemperatur-Start-Energie über den Hochdruckdampf (WTD_{HD}, BD_{HD}) an die Würze bei Erreichen der Verdampfungstemperatur der Würze, bei der aus der Würze Brüdendampf gebildet wird, zumindest zum Teil eingestellt wird und
**dass** dann in einer Kochungsphase zumindest ein Teil der Wärmeenergie des Brüdendampfs mittels des Dampf-Verdichters (26, 34) geboostert und wieder an die Würze (W) abgegeben wird.

2. Verfahren nach Anspruch 1,
**dadurch gekennzeichnet,**
**dass** der Brüdendampf (B) durch einen Brüdendampf-Verdichter (26) geleitet wird, dort eine Druck- und Temperaturerhöhung erfährt und als Hochdruck-Brüdendampf (BD_{HD}) anschließend mittels des Würze-Wärmetauschers (22) Wärmeenergie wieder an die Würze (W) abgibt.

3. Verfahren nach Anspruch 2,
**dadurch gekennzeichnet,**
**dass** der Hochdruck-Brüdendampf (BD_{HD}) primärseitig in den Würze-Wärmetauscher (22) oder in einen weiteren der Würzepfanne (2) zugeordneten Wärmetauscher (37) geleitet wird.

4. Verfahren nach Anspruch 1, 2 oder 3,
**dadurch gekennzeichnet,**
**dass** der Brüdendampf (B) durch einen der Verdampfereinrichtung (32) zugeordneten Brüdendampf-Wärmetauscher (29) geleitet wird und dort Wärmeenergie an das flüssige Verdampfer-Wärmeträgerfluid (WTFv) abgibt, das dann mittels des Wärmeträgerfluid-Dampfverdichters (34) geboostert wird und als Hochdruck-Wärmeträgerdampf (WTD_{HD}) mittels eines der Würzepfanne zugeordneten Wärmetauschers (36) Wärmeenergie wieder an die Würze (W) abgibt.

5. Verfahren Anspruch 4,
**dadurch gekennzeichnet,**
**dass** der Hochdruck-Wärmeträgerdampf (WTD_{HD}) in die Würzepfanne (2) eingeleitet wird, dort kondensiert und dabei die Wärmeenergie unmittelbar an die Würze (W) abgibt.

6. Verfahren nach einem der vorhergehenden Ansprüche,
**dadurch gekennzeichnet,**
**dass** das Verdampfer-Wärmeträgerfluid (WTF_{V} ) Wasser oder ein Wasser enthaltendes Fluid ist.

7. Brauanlage (1), insbesondere zur Durchführung des Verfahren nach einem der vorhergehenden Ansprüche,
- mit zumindest einer Würzepfanne (2) und einem mit dieser in Fluidverbindung stehenden Braufluid-Leitungssystem (11) zur Aufnahme eines Braufluids,
- mit einem Wärmeenergie-Transportsystem (10) mit einer Verdampfer-Fluidleitungsanordnung (30), in der ein Verdampfer-Wärmeträgerfluid (WTF_{V} ) strömt, das mittels einer Niedertemperatur-Primärenergiequelle (5) aufheizbar ist,
- wobei die Verdampfer-Fluidleitungsanordnung (30) mit zumindest einer der Würzepfanne (2) zugeordneten Heizeinrichtung (22, 36) für das Braufluid fluidverbindbar oder fluidverbunden ist,
- wobei die Würzepfanne (2) einen Brüdendampfauslass (23) aufweist, der in einem Würze-Energierückgewinnungssystem (20) über eine Niederdruck-Brüdendampfleitung (24) mit einem Niederdruck-Dampfeinlass (25) eines Brüdendampfverdichters (26) in Fluidverbindung steht,
- wobei ein Hochdruck-Dampfauslass (27) des Brüdendampfverdichters (26) über eine Hochdruck-Brüdendampfleitung (28) mit einem der Würzepfanne (2) zugeordneten Würze-Wärmetauscher (22) in Fluidverbindung bringbar ist und
- wobei Steuerungsmittel vorgesehen sind, die ausgebildet sind, um die Niedertemperatur-Primärenergiequelle (5) und/oder den Wärmeträgerfluidstrom im Wärmeenergie-Transportsystem (10) sowie den Brüdendampfstrom im Würze-Energierückgewinnungssystem (20) zu steuern.

8. Brauanlage (1), insbesondere zur Durchführung des Verfahren nach einem der Ansprüche 1 bis 6,
- mit zumindest einer Würzepfanne (2) und einem mit dieser in Fluidverbindung stehenden Braufluid-Leitungssystem (11) zur Aufnahme eines Braufluids,
- mit einem Wärmeenergie-Transportsystem (10) mit einer Verdampfer-Fluidleitungsanordnung (30), in der ein Verdampfer-Wärmeträgerfluid strömt, das mittels einer Niedertemperatur-Primärenergiequelle (5) aufheizbar ist,
- wobei die Verdampfer-Fluidleitungsanordnung (30) mit zumindest einer der Würzepfanne (2) zugeordneten Heizeinrichtung (22, 36) für das Braufluid fluidverbindbar oder fluidverbunden ist,
- wobei die Würzepfanne (2) einen Brüdendampfauslass (23) aufweist, der in einem Würze-Energierückgewinnungssystem (20') über eine Niederdruck-Brüdendampfleitung (24) mit einem der Verdampfereinrichtung (32) zugeordneten Brüdendampf-Wärmetauscher (29) primärseitig in Fluidverbindung steht, der sekundärseitig ausgebildet ist, um die Wärmeenergie an das flüssige Verdampfer-Wärmeträgerfluid (WTFv) abzugeben, und
- wobei Steuerungsmittel vorgesehen sind, die ausgebildet sind, um die Niedertemperatur-Primärenergiequelle (5) und/oder den Wärmeträgerfluidstrom im Wärmeenergie-Transportsystem (10) sowie den Brüdendampfstrom im Würze-Energierückgewinnungssystem (20') zu steuern.

9. Brauanlage nach Anspruch 7 oder 8,
**dadurch gekennzeichnet,**
**dass** die Verdampfer-Fluidleitungsanordnung (30) eine Verdampfereinrichtung (32) und einen in Strömungsrichtung des Verdampfer-Wärmeträgerfluids nachgeordneten Dampfverdichter (34) aufweist, wobei die Verdampfereinrichtung (32) über eine Niederdruck-Dampfleitung (33) mit dem Dampfverdichter (34) in Fluidverbindung steht und
wobei der Dampfverdichter (34) über eine Hochdruck-Dampfleitung (35) mit der Heizeinrichtung (22 ,36) für das Braufluid in Fluidverbindung steht.

10. Brauanlage nach Anspruch 7, 8 oder 9,
**dadurch gekennzeichnet,**
**dass** die Verdampfer-Fluidleitungsanordnung (30) eine Hochtemperatur-Speicheranordnung aufweist und
**dass** die Verdampfereinrichtung (32) in Strömungsrichtung des Verdampfer-Wärmeträgerfluids der Hochtemperatur-Speicheranordnung nachgeordnet ist.

11. Brauanlage nach einem der Ansprüche 7 bis 10,
**dadurch gekennzeichnet,**
**dass** ein Hochdruck-Dampfeinlass (29) der Würzepfanne (2) eine Injektionsvorrichtung zur Einleitung von Wasser als heißem Hochdruck-Wärmeträgerdampf in die Würzepfanne (2) oder in eine Würze-Zirkulationsleitung aufweist.

12. Brauanlage nach einem der Ansprüche 7 bis 11,
**dadurch gekennzeichnet,**
**dass** zumindest eine Niedertemperatur-Fluidleitungsanordnung (40) vorgesehen ist, die mit einem Niedertemperatur-Wärmeträgerfluid (WTF_{NT}) befüllbar oder befüllt ist, und einen Niedertemperatur-Wärmetauscher (42) aufweist, der primärseitig mit der Niedertemperatur-Fluidleitungsanordnung (40) in Fluidverbindung steht und der sekundärseitig mit der Verdampfer-Fluidleitungsanordnung (30) in Fluidverbindung steht, wobei sekundärseitig die Verdampfereinrichtung (32) dem Niedertemperatur-Wärmetauscher (42) in Strömungsrichtung des Verdampfer-Wärmeträgerfluids nachgeordnet ist.

13. Brauanlage nach Anspruch 12,
**dadurch gekennzeichnet,**
**dass** in der Niedertemperatur-Fluidleitungsanordnung (40) vor dem Niedertemperatur-Wärmetauscher (42) zumindest eine Niedertemperatur - Speicheranordnung (44) für das Niedertemperatur-Wärmeträgerfluid vorgesehen ist.

14. Brauanlage nach einem der Ansprüche 7 bis 13,
**dadurch gekennzeichnet,**
**dass** das Wärmeenergie-Transportsystem (10) mit einer Niedertemperatur-Primärenergiequelle (5) versehen ist, die ausgebildet ist, um ohne fossile Brennstoffe erzeugte thermische Energie in das Verdampfer-Wärmeträgerfluid oder in das Niedertemperatur-Wärmeträgerfluid einzubringen.

15. Brauanlage nach Anspruch 14,
**dadurch gekennzeichnet,**
**dass** die Niedertemperatur-Primärenergiequelle (5) in Strömungsrichtung des Wärmeträgerfluids vor der zugeordneten Speicheranordnung (44) vorgesehen ist.

16. Brauanlage nach Anspruch 14 oder 15,
**dadurch gekennzeichnet,**
**dass** die Niedertemperatur-Primärenergiequelle (5) von einer mit fossilem Brennstoff beheizten Heizeinrichtung und/oder mit elektrischer Energie beheizten Heizeinrichtung und/oder von einer mit Solarenergie oder mit Biogas beheizten Heizeinrichtung und/oder geothermische Energie oder Fernwärme nutzenden Heizeinrichtung gebildet ist oder eine solche aufweist.
